# DEMANDE DE BREVET EUROPEEN

(11) **EP 0 762 097 A1**
(43) Date de publication de la demande: **12.03.1997**
(21) Numéro de dépôt: 96401826.1
(22) Date de dépôt: 27.08.1996
(51) Int. Cl.: G01L 9/06

(54) **Architecture d'intégration d'un élément sensible dans un capteur de pression**

(30) Priorité: 28.08.1995 FR 9510127
(71) Demandeur: SOCIETE EUROPEENNE DE PROPULSION, 92150 Suresnes (FR)
(72) Inventeur: Avisse, Jean-Bernard, 33480 Castelnau de Medoc (FR)
(74) Mandataire: Orian, Yvette Suzanne

(57) **Abrégé**

Un capteur de pression comprenant un élément sensible à substrat (15) en silicium sur lequel sont fixées des jauges extensométriques (16) logé dans un corps de capteur (10). L'élément sensible est monté sur une base (17) reliée à une partie (10b) métallique du corps de capteur (10) par l'intermédiaire d'un élément (18 ; 28) déformable élastiquement propre à compenser des différences de dilatation thermique entre la base (17) et l'élément sensible par rapport au corps (10) du capteur. Le capteur comprend en outre une pièce de reprise d'effort (21) capable de reprendre les efforts exercés par la pression à mesurer sur l'ensemble constitué de la base (17) et l'élément sensible (15). Ce capteur est ainsi adapté à une utilisation à haute pression et dans un environnement à température variable.

## Description

La présente invention concerne la configuration interne d'un capteur de pression et, plus particulièrement, l'architecture d'intégration d'un élément sensible à substrat en silicium dans un tel capteur destiné à mesurer des hautes pressions dans une large gamme de températures.

Pour la mesure de pressions relativement élevées, il est connu d'utiliser des capteurs comprenant un élément sensible en forme de membrane déformable sur laquelle sont implantées des jauges extensométriques, comme décrit dans les documents FR-A-2587485, FR-A-2 594 224 et FR-A-2 594 546. Il est également connu que la membrane déformable peut être réalisée en matériau monocristal tel que saphir monocristal ou silicium monocristal, comme décrit dans FR-A-2 648 910 et FR-A-2 619 446. Le montage de l'élément sensible dans le corps du capteur doit être tel que l'élément sensible est soutenu mécaniquement dans le corps et que la pression à mesurer est amenée à l'élément sensible depuis une partie dite "prise de pression" du capteur.

Un élément sensible à substrat monocristal est habituellement relié à un support dans le corps du capteur au moyen de résine époxy, de verre, par soudure électrostatique ou par procédés de soudure similaires. Le document FR-A-2 619 446 mentionné ci-dessus propose l'utilisation d'une membrane ayant une partie centrale d'épaisseur réduite liée au support au niveau de son rebord périphérique relativement épais afin d'éviter que la sollicitation radiale ou tangentielle de la membrane ne produise d'effets significatifs au niveau des liaisons entre la membrane et le support (ce qui autrement conduirait à la déformation de la membrane voire à sa séparation du support du fait de la différence entre la résistance de la membrane et celle du verre ou autre utilisé dans les liaisons).

Outre les problèmes de différence de résistance entre la membrane et le matériau des liaisons entre celle-ci et son support, un élément sensible à substrat en silicium et un corps de capteur en métal liés rigidement l'un à l'autre produiraient des contraintes mutuelles en température, surtout lorsque la gamme de variation de température pendant l'utilisation est large. De telles contraintes varient selon les fluctuations de température de façon peu prévisible et nuisent à la précision des signaux de sortie des jauges extensométriques ainsi rendant le capteur trop sensible aux transitoires thermiques. Ce problème est d'importance accrue quand il s'agit d'un capteur de haute pression.

Il y a des circonstances où un capteur de haute pression, par exemple pour mesurer une pression de 1000 bars ou même plus, doit être capable de fonctionner de façon fiable bien qu'il soit soumis à des variations de température assez importantes ayant lieu aussi bien de façon transitoire que de façon graduelle. On vise, en particulier, des applications où le capteur de pression est susceptible d'être soumis à des variations de température dans une gamme de 4°K à 473°K (ou plus). Une telle utilisation se trouve dans les fusées et les lanceurs.

Un capteur de pression destiné à mesurer des hautes pressions dans une large gamme de températures doit avoir une bonne tenue dans les conditions prévues. Il est aussi préférable que le capteur soit résistant aux vibrations et qu'il foumisse un signal de sortie fiable même avant qu'une stabilisation de la température se soit produite. Lorsque l'utilisation visée pour le capteur de pression est dans une fusée ou un lanceur, il est aussi nécessaire que le capteur soit résistant aux fluides rencontrés dans les dispositifs de ce genre, tels que l'oxygène (gazeux ou liquide), l'hydrogène (gazeux ou liquide), l'eau (vapeur ou liquide), etc.

Jusqu'à présent, on n'a pas pu réaliser un capteur de pression comprenant un élément sensible à substrat en silicium capable de répondre aux besoins énoncés ci-dessus. Les principales difficultés de réalisation découlent du montage de l'élément sensible dans le corps du capteur. Le coefficient de dilatation thermique du silicium est proche de 2×10⁻⁶/°C alors que les métaux usuels constituant le corps du capteur possèdent un coefficient supérieur à 8,5×10⁻⁶/°C, voire même le double. Comme mentionné ci-dessus, une liaison rigide entre un élément sensible à substrat en silicium et un corps de capteur en métal produiraient des contraintes mutuelles en température. Or, la valeur de pression visée est si élevée qu'une grande rigidité des liaisons internes du capteur semble essentielle pour lui conférer une tenue suffisante en pression.

Un moyen employé afin de remédier à ces inconvénients consiste à éloigner le capteur de pression de la source de pression à très fortes variations de température, en les raccordant par une tuyauterie. Cette tuyauterie sert de tampon thermique. Pourtant, cette solution est très coûteuse et augmente la taille de l'appareil dans son ensemble.

Encore un autre problème qui se produit dans la fabrication d'un capteur comportant un élément sensible à substrat en silicium consiste dans le fait que le silicium ne se soude pas aux métaux, rendant plus difficile la réalisation du capteur.

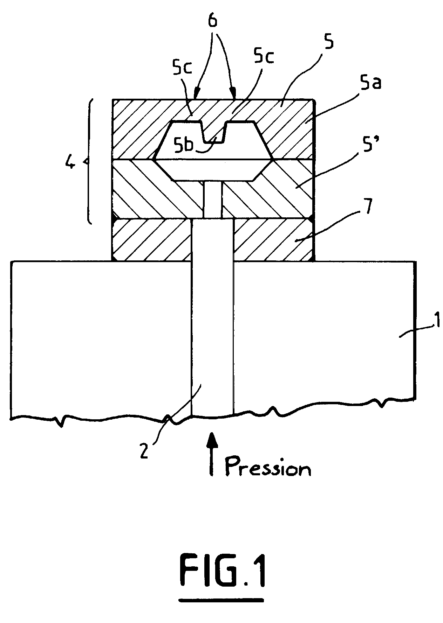

Une architecture classique d'intégration d'un élément sensible à substrat en silicium dans le corps d'un capteur de pression est montrée dans le schéma de la figure 1.

Dans l'architecture d'intégration de la figure 1, le capteur de pression comporte un support métallique 1 parcouru par un trou central 2 raccordé à la source de pression à mesurer. L'élément sensible 4 du capteur consiste en un substrat 5 en silicium sur une surface duquel sont disposées des jauges extensométriques 6. Le substrat en silicium a un rebord périphérique 5a d'épaisseur accrue et un renfort central 5b. Les jauges 6 sont implantées sur le substrat 5 au niveau des régions 5c de celui-ci à épaisseur réduite où sont concentrées les contraintes à détecter. Les jauges sont habituellement en nombre de quatre montées en pont Wheatstone. L'élément sensible 4 peut aussi comporter une pièce de renfort 5' également en silicium.

L'élément sensible 4 est monté sur le support métallique 1 par voie d'une base 7 interposée, en verre ou céramique. Des trous centraux sont percés dans la base et, éventuellement, dans la pièce de renfort 5' de l'élément sensible 4 afin d'amener la pression à mesurer jusqu'aux régions 5c du substrat 5 ou se trouvent les jauges 6.

Dans cette architecture connue, la liaison entre le substrat en silicium 5 (ou le renfort 5' en silicium) et la base 7 est réalisée par soudure anodique, ou par brasure de verre fondu ou par brasure eutectique. La liaison entre la base 7 et le support métallique 1 est réalisée par collage ou brasure. En général ces collages ou brasures ne sont pas adaptés pour permettre la réalisation d'un capteur susceptible d'être utilisé à la fois à haute pression et dans une large gamme de température. En outre, des collages et brasures qui pourraient être adaptés introduiraient des contraintes de construction vers le substrat 5 et donc vers les jauges 6.

Le document FR-A-2 293 704 décrit un capteur de pression dans lequel la base en verre portant l'élément sensible est montée sur le support métallique du capteur non pas directement, mais par l'intermédiaire d'un élément de liaison. Toutefois, les inconvénients précités ne sont pas éliminés.

Dans d'autres documents US-A-4361047, US-A-4127840 et EP-A-0 167 144, la base sur laquelle est fixé l'élément sensible est reliée au corps métallique du capteur par un élément de liaison qui peut être déformable, mais ces montages sont clairement inappropriés à la mesure de très hautes pressions.

La présente invention vise à remédier aux inconvénients mentionnés ci-dessus et, en particulier, elle concerne un capteur de pression capable de mesurer de façon fiable des hautes pressions susceptibles d'atteindre au moins 1000 bars en acceptant des variations de température dans une plage couvrant au moins l'intervalle de 4°K à 473°K, et dans lequel un élément sensible à substrat en silicium est monté dans un corps de capteur de façon à ce que les contraintes d'intégration soient minimisées.

A cet effet, la présente invention prévoit un capteur de pression comprenant :
un corps de capteur ayant une embouchure destinée à recevoir une pression à mesurer ;
un élément sensible à la pression ayant un substrat en silicium sur lequel sont fixées des jauges extensométriques ;
une base sur laquelle est monté l'élément sensible ; et
un élément de liaison reliant la base au corps de capteur ;
caractérisé en ce que :
- l'élément de liaison est déformable élastiquement de manière à compenser des différences de dilatation d'origine thermique entre la base et le corps de capteur, et
- l'élément sensible est relié à une pièce de reprise d'efforts capable de reprendre les efforts exercés sur la base et le substrat par la pression à mesurer, de sorte que lesdits efforts ne sont pas exercés sur l'élément de liaison élastiquement déformable.

Dans le capteur de pression selon l'invention, le montage de l'élément sensible au substrat en silicium est tel que des effets de dilatations thermiques différentielles des éléments du capteur, dus aux transitoires thermiques survenant dans l'environnement, sont amortis par l'élément de liaison déformable élastiquement, tandis que les efforts exercés par la pression à mesurer sont repris par la pièce de reprise d'efforts et n'affectent pas le comportement de l'élément de liaison. De ce fait, il n'est pas nécessaire d'attendre une stabilisation thermique pour que les jauges soient dans les meilleures conditions de mesure. Grâce à ce système d'intégration de l'élément sensible dans le corps du capteur on obtient non seulement un capteur capable de mesurer de très hautes pressions dans une large plage de température, mais également un capteur ayant une précision élevée en dérive thermique stabilisée et une meilleure tenue aux vibrations.

Selon un mode de réalisation préféré de l'invention, l'élément élastique est un clinquant métallique à épaisseur faible de préférence épaulé contre une partie du corps de capteur.

Un élément élastique sous forme d'un clinquant métallique de faible épaisseur présente l'avantage que la contrainte qu'il exerce sur la base du fait des dilatations thermiques différentielles est faible et qu'il peut lui-même supporter les déformations d'origine thermique provenant de sa liaison à la base et au métal du corps du capteur.

Il est avantageux de réaliser l'élément sensible avec une pièce de renfort relativement épaisse en silicium disposée entre le substrat en silicium et la base, cette dernière étant par exemple elle-même réalisée en verre et soudé anodiquement à la pièce de renfort. Les contraintes dues au procédé par lequel la base est fixée à la pièce de renfort sont filtrées par ce renfort, du fait de son épaisseur, et ainsi elles n'affectent guère le substrat en silicium de l'élément sensible.

De préférence, la base sur laquelle est monté l'élément sensible est supportée par un élément métallique du corps de capteur au moyen d'un clinquant métallique soudé à l'une de ses extrémités à un élément métallique du corps de capteur et scellé à l'autre de ses extrémités au matériau de la base.

Par ailleurs, dans un mode de réalisation préféré de la présente invention, la pièce de reprise d'efforts forme un couvercle scellé sur le corps de capteur et contre lequel l'élément sensible s'appuie par l'intermédiaire d'une entretoise, par exemple en verre. De préférence, l'élément sensible est lié à l'entretoise, par exemple par collage, afin d'assurer sa résistance aux vibrations. L'entretoise peut être liée mécaniquement au couvercle.

Le choix des matériaux pour les parties constituantes du capteur permet une optimisation de la compatibilité chimique de ces parties avec les fluides dont la pression est à mesurer. Aussi, le substrat en silicium peut être réalisé à faible coût en utilisant des procédés de fabrication et d'usinage habituellement utilisés dans la technologie des semiconducteurs

Sur les dessins annexés :
- la Figure 1 est un schéma montrant le montage d'un élément sensible à substrat en silicium dans un capteur de pression de l'art antérieur;
- la Figure 2 illustre de façon schématique l'architecture d'intégration d'un élément sensible à substrat en silicium dans un capteur de pression selon un premier mode de réalisation de l'invention; et
- la Figure 3 illustre de façon schématique l'architecture d'intégration d'un élément sensible à substrat en silicium dans un capteur de pression selon un deuxième mode de réalisation de l'invention.

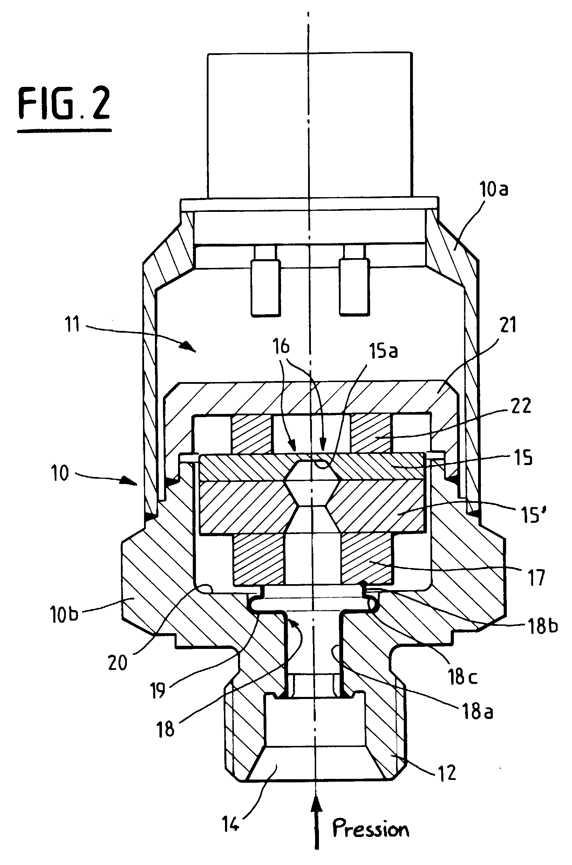

Tel que représenté par la Figure 2, le capteur de pression comporte un corps de révolution métallique 10 constitué d'une partie supérieure 10a et d'une partie inférieure 10b scellées l'une à l'autre pour définir une chambre 11. La partie inférieure est prolongée axialement à sa base par une partie tubulaire 12 constituant prise de pression ouverte à son extrémité pour former une embouchure 14. La prise de pression 12 est destinée à être raccordée à une source de pression à mesurer et communique avec la chambre 11.

Un élément sensible disposé dans la chambre 11 comporte un substrat 15 en silicium en forme de disque avec une partie centrale amincie 15a sur laquelle sont implantées des jauges extensométriques 16. Le substrat 15 est scellé sur une pièce de renfort 15' relativement épaisse, également en silicium. La pièce 15' est scellée sur une base 17 en verre, par exemple de type "Pyrex 7740" ou équivalent. Le scellement sur la base 17 est par exemple réalisé par soudure anodique, telle qu'une soudure type "Mallory". Le fait que la base en verre 17 soit soudée sur une pièce de renfort relativement épaisse, et non directement sur le substrat 15 permet de filtrer les contraintes qui pourraient venir de cette soudure. La pièce de renfort 15' présente un passage central 15'a et la base 17 est annulaire afin que la pression présente à l'embouchure 14 puisse être amenée directement à la partie centrale 15a de l'élément sensible.

L'ensemble constitué par le substrat 15 portant les jauges 16, la pièce de renfort 15' et la base 17 est relié au corps 10 par un élément déformable élastiquement ici constitué par un clinquant métallique 18, de faible épaisseur, par exemple environ 0,1 mm, réalisé par exemple en inox. Le clinquant 18 a une forme générale de révolution avec une première partie cylindrique 18a soudée à son extrémité sur la paroi interne de la partie inférieure 10b du corps 10, une deuxième partie cylindrique 18b soudée à son extrémité à la face inférieure de la base 17, et une partie intermédiaire renflée 18c raccordant les parties cylindriques 18a et 18b. La partie renflée 18c à profil sensiblement en U confère au clinquant 18 une capacité de déformation élastique en direction axiale. La paroi cylindrique interne de la partie inférieure 10b du corps de capteur présente une portion de plus grand diamètre qui définit un épaulement 19 sur le fond duquel se loge la partie renflée 18c du clinquant 18, de sorte que celle-ci est maintenue latéralement.

A sa partie d'extrémité supérieure, la partie 10b du corps de capteur a une paroi interne de diamètre encore élargi qui entoure l'essentiel de l'ensemble formé par le substrat 15, la pièce 15' et la base 17 et qui se raccorde à l'épaulement 19 par une surface radiale 20. Le déplacement axial de l'ensemble 15, 15', 17 sous l'effet de la déformation élastique du clinquant 18 est limité, à une extrémité, par la surface 20 formant butée susceptible de coopérer avec la face inférieure de la base 17, et, à l'autre extrémité, par une pièce massive 21 formant couvercle scellé sur la partie 10b du corps et contre laquelle le substrat 15 peut s'appuyer par l'intermédiaire d'une entretoise annulaire 22. Cette dernière est par exemple en verre, comme la base 17, et est fixée au substrat 15, par exemple par collage.

Ainsi, lors du fonctionnement du capteur, l'effort exercé sur l'ensemble 15, 15', 17, 22 par la pression à mesurer est repris par la pièce massive 21 et n'est pas appliqué au clinquant 18 qui peut alors exercer de façon optimale sa fonction de compenser des variations dimensionnelles différentielles d'origine thermique et d'amortir d'éventuelles vibrations.

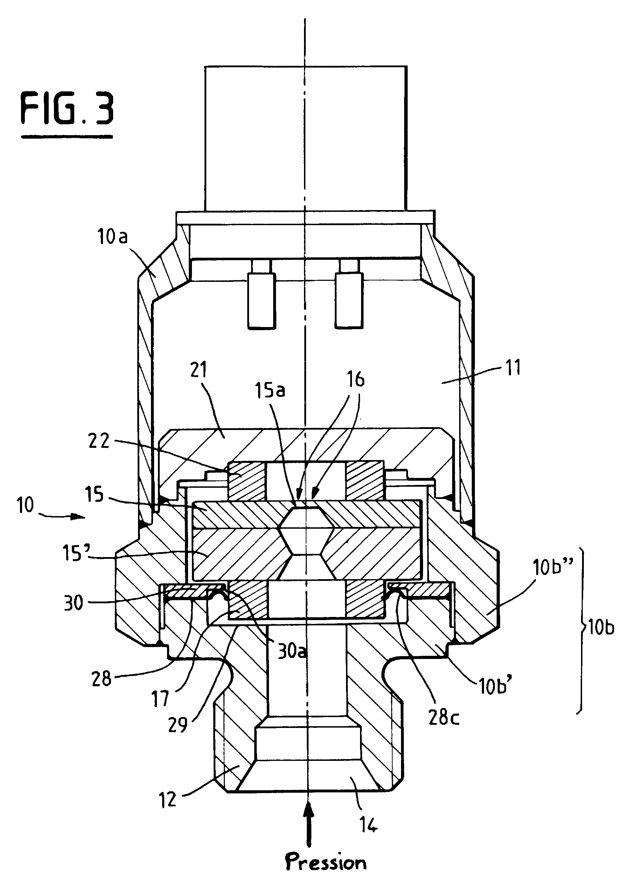

La Figure 3 illustre un deuxième mode de réalisation d'un capteur selon l'invention. Celui-ci se distingue du capteur de la Figure 2 essentiellement par la réalisation de l'élément élastiquement déformable et la construction de la partie inférieure 10b du corps de capteur. Les autres éléments constitutifs du capteur n'étant pas modifiés, ils ne seront pas à nouveau décrits.

Dans ce deuxième mode de réalisation , l'élément élastiquement déformable est encore un clinquant métallique 28 de faible épaisseur. Le clinquant 28 présente ici essentiellement une forme d'anneau plat disposé radialement qui est lié à la partie 10b du corps de capteur au voisinage de sa périphérie externe et qui est scellé sur la base 17 à sa périphérie interne. La liaison avec la base 17 est ici réalisée sur la surface externe de celle-ci, non sur sa surface inférieure. Au voisinage de sa périphérie interne, le clinquant 28 présente un renflement annulaire 28c à section sensiblement en forme de U ouvert en direction de l'extrémité inférieure du capteur.

La partie inférieure du capteur comprend ici une section inférieure 10b' et une section supérieure 10b" fixée l'une à l'autre avec interposition d'une bague 30. A sa partie supérieure, la section 10b' a un diamètre interne élargi définissant un logement qui entoure l'essentiel de la base 17 et se raccordant avec le reste de la paroi interne de la section 10b' par une surface radiale formant butée 29. La butée 29 coopère avec la face inférieure de la base 17 pour limiter le déplacement axial de l'ensemble 15, 15', 17 en direction opposée à celle d'établissement de la pression. Dans la direction opposée, l'effort exercé par la pression à mesurer est repris par la pièce 21 coopérant avec l'entretoise 22 et soudée sur la partie 10b, comme dans le mode de réalisation de la Figure 2.

La bague 30 présente une collerette à sa périphérie interne qui définit une surface d'appui 30a ou épaulement contre lequel le clinquant 28 vient en contact par le sommet de sa partie renflée 28c. A sa périphérie extérieure, le clinquant 28 est maintenu entre la bague 30 et la section 10b'.

## Revendications

1. Capteur de pression comprenant:
- un corps de capteur (10) ayant une embouchure (14) destinée à recevoir une pression à mesurer ;
- un élément sensible à la pression ayant un substrat en silicium (15) sur lequel sont fixées des jauges extensométriques (16);
- une base (17) sur laquelle est monté l'élément sensible, et
- un élément de liaison (18 ; 28) reliant la base au corps de capteur,
caractérisé en ce, afin de pouvoir mesurer de façon fiable des hautes pressions susceptibles d'atteindre au moins 1000 bars en supportant des variations de température dans une plage couvrant au moins l'intervalle de 4°K à 473°K,
- l'élément de liaison (18;28) est déformable élastiquement de manière à compenser des différences de dilatation d'origine thermique entre la base et le corps de capteur, et
- l'élément sensible est relié à une pièce de reprise d'efforts (21) capable de reprendre les efforts exercés sur la base (17) et le substrat (15) par la pression à mesurer, de sorte que lesdits efforts ne sont pas exercés sur l'élément de liaison élastiquement déformable.

2. Capteur selon la revendication 1, caractérisé en ce que l'élément élastique comprend un clinquant métallique (18 ; 28).

3. Capteur selon la revendication 2, caractérisé en ce que le clinquant métallique (18; 28) a une première extrémité reliée à la base (17) et une deuxième extrémité reliée à un élément métallique (10b) du corps du capteur.

4. Capteur selon l'une quelconque des revendications 2 et 3, caractérisé en ce que le clinquant est épaulé contre une paroi interne du corps du capteur (10) entre ses extrémités.

5. Capteur selon l'une quelconque des revendications 1 à 4, caractérisé en ce que l'élément sensible comprend en outre une pièce de renfort (15') en silicium, disposée entre le substrat en silicium (15) et la base (17), et en ce que la base est reliée à la pièce de renfort (15').

6. Capteur selon la revendication 5, caractérisé en ce que la base (17) est en verre soudé anodiquement sur la pièce de renfort (15').

7. Capteur selon l'une quelconque des revendications 1 à 6, caractérisé en ce que la pièce de reprise d'effort forme couvercle (21) scellé sur le corps de capteur (10) et contre lequel l'élément sensible s'appuie par l'intermédiaire d'une entretoise (22).

8. Capteur selon la revendication 7, caractérisé en ce que l'entretoise (22) est en verre.

9. Capteur selon l'une quelconque des revendications 7 et 8, caractérisé en ce que l'entretoise (22) est fixée au substrat (15) par collage.
